# EUROPÄISCHE PATENTSCHRIFT

(11) **EP 1 067 307 B1**
(45) Veröffentlichungstag und Bekanntmachung des Hinweises auf die Patenterteilung: **17.12.2003**
(21) Anmeldenummer: 00111605.2
(22) Anmeldetag: 31.05.2000
(51) Int. Cl.: F16F 1/38, B60G 21/055

(54) **Lagerbuchse, insbesondere für die Lagerung eines Stabilisatorstabs an einem Kraftfahrzeug**
Bearing bush, in particular for the support of a vehicle stabiliser bar
Palier, en particulier pour barre stabilisatrice d'un véhicule

(30) Priorität: 06.07.1999 DE 19931138
(43) Veröffentlichungstag der Anmeldung: 10.01.2001
(73) Patentinhaber: Jörn ELZA GmbH, 71336 Waiblingen (DE)
(72) Erfinder: Zawadzki, Bernd, 71404 Korb (DE); Seck, Gerhard, 73630 Remshalden (DE); Stummet, Josef, 85716 Unterschleissheim (DE); Schwaiger, Franz, 80997 München (DE); Schmitt, Peter, 80937 München (DE)
(74) Vertreter: Neubauer, Hans-Jürgen, Dipl.-Phys.

(56) Entgegenhaltungen:
- DE-A- 3 411 343
- DE-A- 19 756 907
- GB-A- 1 586 057
- US-A- 4 707 149
- US-A- 5 013 166

## Beschreibung

Die Erfindung betrifft eine Lagerbuchse, insbesondere für die Lagerung eines Stabilisatorstabs an einem Kraftfahrzeug nach dem Oberbegriff des Anspruchs 1.

Stabilisatorlager dienen als Gelenk und zur Lagerung des an beiden Seiten abgebogenen Stabilisatordrehstabes an einem Fahrzeugrahmen. Sie nehmen die Verdrehungen des Stabilisatorstabes auf und müssen insbesondere bei Nutzfahrzeugen hohe Radialkräfte ertragen.

Eine bekannte Stabilisatorlagerung (DE-OS 26 08 553) enthält eine Gummi-Metall-Buchse mit äußeren, zusammenspannbaren Lager-Halbschalen, die ein Aufnahmeauge bilden. Im Aufnahmeauge sind zwei zusammenspannbare Gummi-Metall-Halbschalen angebracht, die aus je einer Gummi-Halbschale mit je einer ersten, innen festhaftend aufvulkanisierten, inneren Metall-Halbschale und je einer zweiten, außen festhaftend aufvulkanisierten, äußeren Metall-Halbschale bestehen. Vor dem Zusammenspannen liegen die Gummi-Metall-Halbschalen mit Längsschlitzen aneinander, die beim Zusammenspannen geschlossen werden. Weiter ist je eine dünne Gummischicht vorgesehen, die festhaftend an der Innenseite der inneren Metall-Halbschalen aufvulkanisiert ist. Durch das Zusammenspannen wird in den Gummi-Halbschalen eine Radialspannung erzeugt, durch die die Gummi-Metall-Buchse bzw. die Gummi-Metall-Halbschalen sowohl im Aufnahmeauge als auch am Stabilisatorstab unverdrehbar gehalten werden, wobei die dünne Gummischicht an der Buchseninnenseite insbesondere zur Erhöhung des Reibwerts dient. Die Bewegungsaufnahme erfolgt molekular in den unter Vorspannung stehenden Gummi-Halbschalen, die sich beim Zusammenspannen zu einem durchgehenden, zylindrischen Ring angelegt haben. Damit wird eine hohe Dauerhaltbarkeit und Wartungsfreiheit erzielt. Es handelt sich hierbei um eine zweiteilige Ausführung mit zwei getrennten Gummi-Metall-Halbschalen.

Für eine verbesserte Handhabung bei der Montage ist eine ähnliche Stabilisatorlagerung bekannt (EP 0 381 945 A2), bei der an einer Längsseite gegenüberliegende Gummi-Metall-Halbschalen mittels einer dünnen Gummischicht als Gummi-Filmscharnier aufklappbar verbunden sind. Damit wird erreicht, daß die Gummi-Metall-Halbschalen zusammenhängen und um das Gummischarnier aufgeklappt und auf einen Stabilisatorstab aufgesteckt werden können dergestalt, daß sie durch die Rückstellkraft des Gummis wieder schließen und dort vorläufig bis zum Heranführen der äußeren Lager-Halbschalen von selbst halten.

Die vorstehend genannten Lagerbuchsen als Stabilisatorlager weisen Rückstellkräfte in ihre Ausgangslage auf. Insbesondere bei Nutzfahrzeugen sind durch eine weiter entwickelte Leichtbauweise und verkürzte Stabilisatorarme verwendete Luftfederdämpfersysteme gegen zusätzliche Federeinflüsse empfindlich geworden. Je nach den Gegebenheiten können dabei die vorstehend genannten Stabilisatorlagerungen aufgrund ihrer relativ großen Rückstellmomente unerwünschte Einflüsse haben.

Es sind bereits Stabilisatorlagerungen als gleitende Ausführungen bekannt (EP 0 623 483 B1), bei denen eine den Stabilisatorstab umgreifende, zweischalige Kunststoffbuchse auf der Mantelfläche des Stabilisators gleitet.

Zur Dauerschmierung sind in der Gleitfläche der Kunststoffbuchse mit Schmiermittel gefüllte Taschen eingeformt. Eine aufwendige, jeweils stirnseitige Dichtlippenausbildung aus mehreren Einzellippen soll das Schmiermittel im Lager halten. Eine solche Kunststofflagerung gegebenenfalls in Verbindung mit weiteren Gummielementen weist zwar praktisch kaum ein Rückstellmoment auf, gleitet jedoch nachteilig direkt auf der Stabilisatormantelfläche. Diese Mantelfläche ist ohne Nachbearbeitung hinsichtlich der Oberflächenqualität und von Maßtoleranzen als Lagergleitfläche nur unzureichend geeignet, so daß Kunststoffgleitflächen und Dichtlippengleitflächen einem erhöhten Verschleiß unterliegen. Eine Nachbearbeitung von Mantelflächen des Stabilisators im Bereich von Stabilisatorlagerungen wäre sehr aufwendig.

Weiterhin zeigt die PS US 4 707 149 eine Lagerbuchse nach dem Oberbegriff des Anspruchs 1.

Aufgabe der Erfindung ist es, eine Lagerbuchse mit Gleitfunktion und weitgehend rückstellkraftfrei zu schaffen, die bei einfachem Aufbau auch bei hoher Belastung eine große Dauerhaltbarkeit aufweist.

Diese Aufgabe wird mit den Merkmalen des Anspruchs 1 gelöst.

Gemäß Anspruch 1 besteht die Lagerbuchse aus einer Innenbuchse und einer Außenbuchse. Für die Innenbuchse sind Innen-Halbschalen mit einer Innenoberfläche mit hoher Reibung vorgesehen, so daß die Innenbuchse nach der Montage der Lagerbuchse bei aufgebrachter Vorspannung auf einem Lagerzapfen, insbesondere einem Stabilisatorstab, verdrehfest gehalten ist.

Für die Außenbuchse sind Außen-Halbschalen vorgesehen mit einer Außenoberfläche dergestalt, daß nach der Montage der Lagerbuchse bei aufgebrachter Vorspannung die Außenbuchse im Aufnahmeauge verdrehfest gehalten ist.

Die Anlageflächen zwischen der Innenbuchse und der Außenbuchse sind als Gleitflächen ausgebildet.

Damit liegen hier die Gleitflächen innerhalb der Lagerbuchse, wodurch geeignete Oberflächenqualitäten mit geringen Toleranzen verfügbar sind, die eine Dauerhaltbarkeit positiv beeinflussen. Zudem kann dadurch ein Schmiermittelaufwand erheblich reduziert werden oder auf (nahezu) schmiermittelfreie Gleitmaterialien zurückgegriffen werden.

Je nach Ausführung der Gleitflächen und der Größe der aufgebrachten radialen Vorspannung kann für die Gleitbewegung ein mehr oder weniger großes Losbrechmoment vorgesehen werden, wodurch gegebenenfalls geringe Auslenkungen auch molekular in den verwendeten Gummi-Schalenbereichen aufnehmbar sind. Zudem sind auch kardanische Bewegungen im Gummi molekular aufnehmbar.

Durch die Verwendung von Halbschalen sowohl bei der Innenbuchse als auch bei der Außenbuchse kann die Lagerbuchse insgesamt durch radiales Aufstecken insbesondere auf einen Stabilisatorstab einfach montiert werden.

Die Innen-Halbschalen der Innenbuchse sind aus Metall-Gleithalbschalen gebildet, auf deren Innenoberfläche eine innere Gummischicht insbesondere zur Erhöhung eines Reibwerts aufvulkanisiert ist und deren Außenoberflächen Gleitflächen für die Außenbuchse bilden. Die Außen-Halbschalen der Außenbuchse bestehen aus Metall-Außenhalbschalen und radial inneren Kunststoff-Gleithalbschalen, zwischen denen Gummi-Halbschalen einvulkanisiert sind. Die Innenoberflächen der Kunststoff-Gleithalbschalen bilden Gleitflächen bezüglich der Innenbuchse.

Durch die Paarung der metallischen Außenoberfläche der Metall-Gleithalbschalen und der Innenoberflächen der Kunststoff-Gleithalbschalen wird ein hervorragendes Gleitverhalten geschaffen. Bei Verwendung eines geeigneten Kunststoffmaterials kann die Gleitfunktion (insbesondere bei einer weiter unten angegebenen, stirnseitigen Abdichtung) weitgehend schmiermittelfrei und verschleißfrei mit hoher Dauerhaltbarkeit hergestellt werden.

Zur Erhöhung des Reibwerts und für eine Möglichkeit einer gewissen Gummiverdrängung beim Zusammenspannen der Lagerbuchse wird mit Anspruch 2 vorgeschlagen, daß die innere Gummischicht axiale Längsnuten aufweist.

Für eine jeweils stirnseitige Abdichtung zwischen einem Lagerinnenteil, insbesondere einem Stabilisatorstab und der Innen-Halbschalen ist es nach Anspruch 3 vorteilhaft, die innere Gummischicht im Stirnseitenbereich nach radial innen zu Dichtlippen auszubilden.

Für eine vorteilhafte, axial formschlüssige Seitenführung der Kunststoff-Gleithalbschalen auf den Metall-Gleithalbschalen wird nach Anspruch 4 beansprucht, diese stirnseitig nach radial außen winkelig zu Seitenführungsstegen zu prägen.

Grundsätzlich sind an sich bekannte, stirnseitige Dichtlippenausführungen aus Elastomermaterial verwendbar. Eine besonders funktionsfähige und einfach herstellbare Dichtlippenanordnung ergibt sich nach Anspruch 5 dadurch, daß im Bereich der vorstehend genannten Seitenführungsstege jeweils eine stirnseitige Dichtlippe aus Gummi, vorzugsweise integral mit der inneren Gummischicht angeformt ist. Diese Dichtlippe steht in einem Hinterschneidungsbereich mit einem umlaufenden Bund zur axialen Lagermitte hin im Abstand der Dicke der Kunststoff-Gleithalbschalen gegenüber der metallischen Gleitfläche vor. Dieser Bund übergreift anliegend die Kunststoff-Gleithalbschalen in einem axialen Randbereich und dichtet dadurch die Gleitfläche nach axial außen ab. Durch die übergreifende Anlage werden auch die Innenbuchse und die Außenbuchse bzw. die Innen-Halbschalen und Außen-Halbschalen in einem zusammengebauten Vormontagezustand (gegebenenfalls vor einem Aufsetzen auf einen Stabilisatorstab) zusammengehalten.

Um so einen Zusammenbau zu vereinfachen wird nach Anspruch 6 die stirnseitige Dichtlippe nach radial außen mit einem kegelförmig schräg gestellten Einführring als Einführschräge ausgebildet. Dadurch werden beim Zusammenbau die gegenüberliegenden Einführringe etwas auseinandergedrückt, so daß die Kunststoff-Gleithalbschalen in den Hinterschneidungsbereich einfach einclipsbar sind.

Alternativ zu einer solchen Ausführungsform mit einem Einführring kann nach Anspruch 7 auch jeweils im axialen Randbereich der Kunststoff-Gleithalbschalen an deren radial äußerer Oberfläche ein umlaufender Gummiwulst gebildet sein, der von einer zugeordneten Nut im übergreifenden Bund der Dichtlippe dicht überdeckt ist. Damit ergibt sich auch hier eine gute Dichtfunktion, wobei jedoch wegen der fehlenden Einlaufschrägen die Montage etwas aufwendiger und gegebenenfalls mit Werkzeug durchführbar ist.

Um ein hindernisfreies Gleiten an den Längsstoßlinien der Gleitflächen zu gewährleisten, werden nach Anspruch 8 an den Kunststoff-Gleithalbschalen an deren stirnseitig zur jeweiligen Trennebene weisenden Innenflächen Fasen von vorzugsweise ca. 15° vorgesehen. Entsprechende Fasen können auch an den Metall-Gleithalbschalen an deren Außenflächen vorzugsweise mit einem Fasenwinkel von ca. 30° verwendet werden.

Zur Verbesserung der Handhabung und der Montage sollen nach Anspruch 9 in an sich bekannter Weise die Innen-Halbschalen einseitig an einer Längsseite durch eine Gummibrücke, vorzugsweise mittels einer dort durchgehend ausgebildeten inneren Gummischicht klappbar verbunden sein. Bei der Dimensionierung und Anordnung dieser Gummischicht ist dafür Sorge zu tragen, daß beim Zusammenspannen der Innen-Halbschalen die dann verdrängte Gummischicht nicht in den Bereich der Gleitflächen gelangt und dort den Gleitvorgang behindert.

Zudem sollen auch nach Anspruch 10 in an sich bekannter Weise entsprechend die Außen-Halbschalen einseitig an einer Längsseite durch einen Gummisteg klappbar verbunden sein. Die beiden klappbar verbundenen Innen-Halbschalen und die klappbar verbundenen Außen-Halbschalen stellen dann jeweils ein separates Vulkanisierelement dar.

Der Gummisteg zwischen den Außen-Halbschalen wird nach Anspruch 11 radial nach außen winkelig, insbesondere in einem 90°-Winkel ausgebildet, so daß bei einem Zusammenspannen der Innenbuchse und Außenbuchse ein Knickverhalten des Gummistegs weg von der Gleitfläche vorgegeben ist. Damit wird sichergestellt, daß kein beim Zusammenspannen verdrängter Gummi des Gummistegs in den Bereich der Gleitflächen gelangt und dort den Gleitvorgang behindern kann.

Die beiden jeweils längseinseitig verbundenen Außen-Halbschalen und Innen-Halbschalen werden nach Anspruch 12 mit einem Mittelpunktversatz, vorzugsweise von ca. 3 mm hergestellt. Zudem wird wenigstens eine der Gleitflächen vor dem Zusammenbau gemäß Anspruch 13 eingefettet.

Die Montage der Lagerbuchse auf einem Stabilisatorstab erfolgt dergestalt, daß in einem ersten Montageschritt die Außenbuchse auf der vorher an der Gleitfläche eingefetteten Innenbuchse radial montiert wird. Bei dieser radialen Montage werden die Kunststoff-Gleithalbschalen hinter die Dichtlippen gedrückt bis sie an den Hinterschneidungen einrasten. Die Außenbuchsen und Innenbuchsen müssen mit ihren Trennebenen bzw. ihren klappbaren Gummischichten auf gleicher Höhe stehen, damit beide zusammen aufgeklappt werden können und über einen Stabilisator gesteckt werden können. Der vorstehend genannte Mittelpunktversatz von ca. 3 mm verhindert, daß beim Aufklappen der vormontierten Einheit aus Innenbuchse und Außenbuchse sich die gegeneinander verrasteten Schalen so verschieben, daß es sich wieder unbeabsichtigt aus der Hinterschneidung lösen.

Nach dem Aufstecken der vormontierten Einheit wird das beispielsweise in der Art einer Schelle ausgeführte Aufnahmeauge geschlossen und die radiale Vorspannung aufgebracht.

Anhand einer Zeichnung wird die Erfindung näher erläutert.

Es zeigen:
- Fig. 1: einen schematischen Querschnitt durch eine Innenbuchse einer erfindungsgemäßen Lagerbuchse,
- Fig. 2: eine schematische Draufsicht auf die Lagerbuchse nach Fig. 1,
- Fig. 3: eine schematische, vergrößerte Darstellung des Details C der Fig. 1,
- Fig. 4: eine schematische, vergrößerte Darstellung des Details B der Fig. 2,
- Fig. 5: eine schematische, vergrößerte Darstellung des Details D der Fig. 2,
- Fig. 6: einen schematischen Querschnitt durch eine Außenbuchse einer erfindungsgemäßen Lagerbuchse,
- Fig. 7: eine schematische Draufsicht auf die Lagerbuchse nach Fig. 6,
- Fig. 8: eine schematische, vergrößerte Darstellung des Details X der Fig. 7,
- Fig. 9: eine schematische, vergrößerte Darstellung des Details Y der Fig. 7,
- Fig. 10: einen schematischen Querschnitt durch eine Ausführungsform einer erfindungsgemäßen Lagerbuchse im montierten Zustand, und
- Fig. 11: eine schematische, vergrößerte Darstellung des Details Z der Fig. 10.

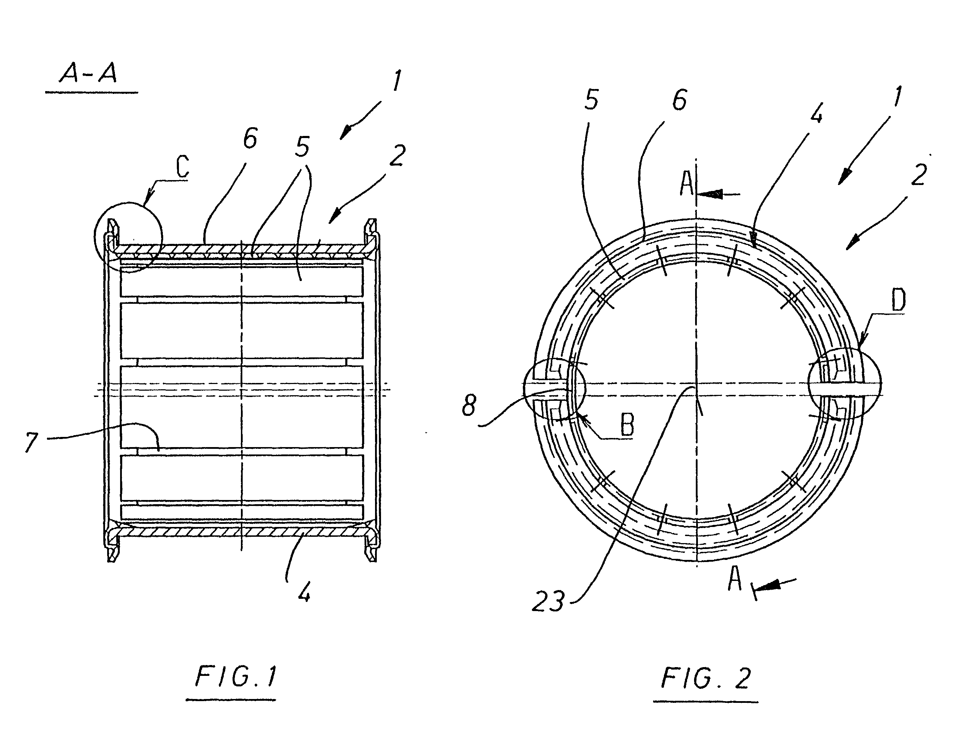

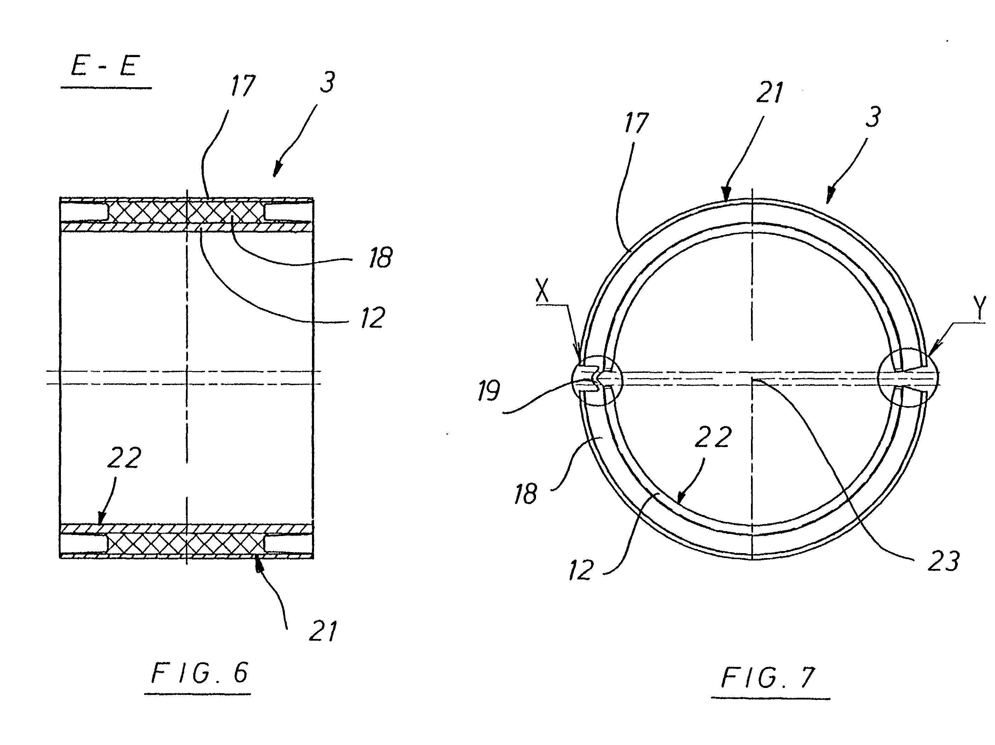

Eine erfindungsgemäße Lagerbuchse 1 umfaßt eine in den Fig. 1 bis 5 im Detail dargestellte Innenbuchse 2 sowie eine in den Fig. 6 bis 9 dargestellte Außenbuchse 3. Eine derartige Lagerbuchse 1 ist insbesondere für die Lagerung eines Stabilisatorstabes an einem Kraftfahrzeug geeignet, wobei die Lagerbuchse 1 in einem kraftfahrzeugseitigen Aufnahmeauge zur Aufbringung einer Gummivorspannung zusammenspannbar ist.

Wie dies den Fig. 1 und 2 entnehmbar ist, ist die Innenbuchse 2 aus als Metall-Gleithalbschalen ausgebildeten Innen-Halbschalen 4 aufgebaut, auf deren Innenoberflächen zur Ausbildung einer Innenoberfläche mit hoher Reibung eine innere Gummischicht 5 aufvulkanisiert ist. Dadurch ist sichergestellt, daß die Innenbuchse 2 nach der Montage der Lagerbuchse 1 bei aufgebrachter Vorspannung auf einem hier nicht dargestellten Stabilisatorstab verdrehfest gehalten ist.

Auf den Außenoberflächen der Innen-Halbschalen 4 sind Gleitflächen 6 für die Außenbuchse 3 ausgebildet.

Wie dies insbesondere der Fig. 1 entnommen werden kann, ist die innere Gummischicht 5 mit axialen Längsnuten 7 versehen, um beim Zusammenspannen der Lagerbuchse 1 die Möglichkeit der Gummiverdrängung sicherzustellen.

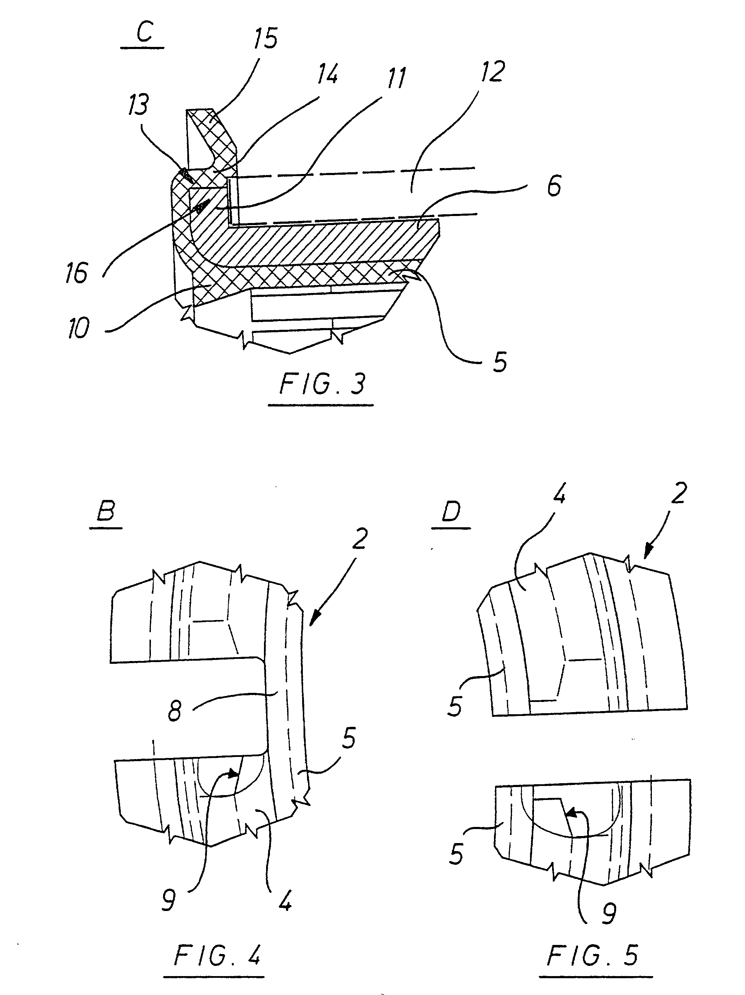

Wie dies Fig. 2 in Verbindung mit Fig. 4 entnommen werden kann, sind die Innenhalbschalen 4 einseitig an einer Längsseite durch eine Gummibrücke 8 mittels einer dort durchgehend ausgebildeten, inneren Gummischicht 5 klappbar verbunden.

Wie dies aus Fig. 2 in Verbindung mit den die Details B und D zeigenden Fig. 4 und 5 ersichtlich ist, sind an den stirnseitig zur jeweiligen Trennebene weisenden Außenflächen der Innen-Halbschalen 4 jeweils Fasen 9, vorzugsweise mit einem Fasenwinkel von ca. 30°, ausgebildet.

Aus Fig. 3, die eine vergrößerte Darstellung des Details C der Fig. 1 darstellt, ist weiter ersichtlich, daß die innere Gummischicht 5 für eine jeweils stimseitige Abdichtung zwischen dem Stabilisatorstab und den Innen-Halbschalen 4 im Stirnseitenbereich nach radial innen zu Dichtlippen 10 ausgebildet ist.

Aus Fig. 3 ist weiter ersichtlich, daß die Innen-Halbschalen 4 stirnseitig nach radial außen winklig zu Seitenführungsstegen 11 geprägt sind. Zwischen diesen Seitenführungsstegen 11 sind, wie dies nachfolgend in Verbindung mit der Außenbuchse 3 näher beschrieben wird, in der Darstellung der Fig. 3 lediglich strichliert eingezeichnete Kunststoff-Gleithalbschalen 12 der Außenbuchse 3 axial formschlüssig gehalten.

Im Bereich der Seitenführungsstege 11 ist jeweils eine stirnseitige Gummi-Dichtlippe 13, die integral mit der inneren Gummischicht 5 verbunden ist, vorgesehen. Diese Gummi-Dichtlippe 13 steht mit einem umlaufenden Bund 14 zur axialen Lagermitte hin vor und bildet einen Hinterschneidungsbereich 16 aus. Der Bund 14 übergreift die Kunststoff-Gleithalbschalen 12 der Außenbuchse 3 in einem axialen Randbereich und dichtet dadurch die Gleitflächen nach außen ab, wobei durch diesen Bund 14 die Innenbuchse 2 und die Außenbuchse 3 zudem in einem Vormontagezustand zusammengehalten werden.

Der Fig. 3 ist weiter zu entnehmen, daß diese stirnseitige Gummi-Dichtlippe 13 ferner nach radial außen mit einem kegelförmig schräg gestellten Einführring 15 ausgebildet ist. Dieser Einführring 15 fungiert als Einführschräge, so daß beim Zusammenbau der Lagerbuchse 1 und dem damit verbundenen Aufsetzen der Außenbuchse 3 auf die Innenbuchse 2 die gegenüberliegenden Einführringe 15 der Innenbuchse 2 auseinandergedrückt werden, so daß die Kunststoff-Gleithalbschalen 12 der Außenbuchse 3 in den Hinterschneidungsbereich 16 der Gummi-Dichtlippe 13 einclipsbar sind.

In den Fig. 6 und 7 ist die Außenbuchse 3 dargestellt, die aus als Metall-Außenhalbschalen ausgebildeten Außen-Halbschalen 17 sowie den in Verbindung mit der Fig. 3 bereits beschriebenen radial inneren Kunststoff-Gleithalbschalen 12 besteht. Zwischen diesen Außen-Halbschalen 17 und den Kunststoff-Gleithalbschalen 12 sind, wie dies insbesondere aus der Fig. 6 ersichtlich ist, Gummi-Halbschalen 18 einvulkanisiert.

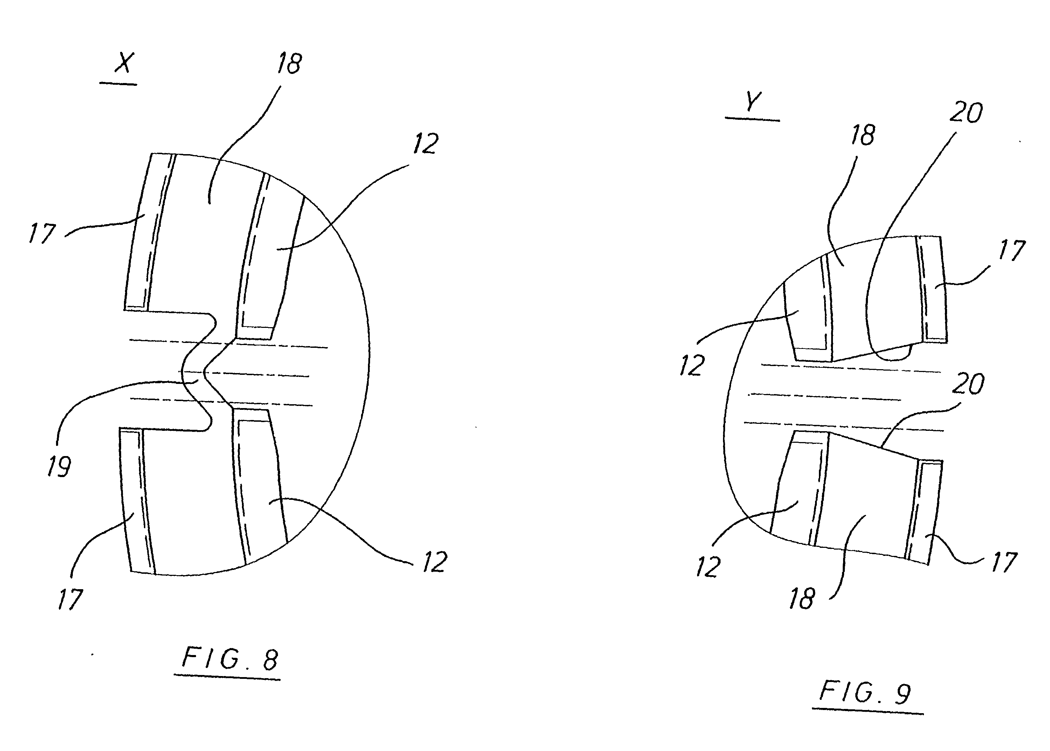

Wie dies insbesondere aus Fig. 7 in Verbindung mit der vergrößerten Darstellung des Details X in Fig. 8 ersichtlich ist, sind die Außen-Halbschalen 17 einseitig an einer Längsseite durch einen Gummisteg 19 klappbar miteinander verbunden. Wie dies insbesondere aus Fig. 8 ersichtlich ist, ist dieser Gummisteg 19 zwischen den Außen-Halbschalen 17 radial nach außen winklig, hier beispielsweise in einem 90°-Winkel, ausgebildet, so daß bei einem Zusammenspannen der Innenbuchse 2 und der Außenbuchse 3 ein Knickverhalten des Gummistegs 19 weg von der Gleitfläche vorgegeben ist. Damit wird sichergestellt, daß beim Zusammenspannen der Innenbuchse 2 und der Außenbuchse 3 kein verdrängter Gummi des Gummistegs 19 in den Bereich der Gleitflächen gelangt und dort den Gleitvorgang behindert.

Aus den Fig. 8 und 9 ist ferner ersichtlich, daß die Kunststoff-Gleithalbschalen 12 an den stirnseitig zur jeweiligen Trennebene weisenden Innenflächen eine Fase 20, hier beispielsweise von ca. 15°, aufweisen.

Die Außenoberfläche 21 der Außen-Halbschalen 17 ist so ausgebildet, daß nach der Montage der Lagerbuchse 1 bei einer aufgebrachten Vorspannung die Außenbuchse 3 verdrehfest im hier nicht dargestellten Aufnahmeauge gehalten ist.

Dagegen bilden die Innenoberflächen 22 der Kunststoff-Gleithalbschalen 12 Gleitflächen bezüglich der Gleitfläche 6 der Innenbuchse 2 aus.

Bei der Montage wird in einem ersten Montageschritt die Außenbuchse 3 mit den Kunststoff-Gleithalbschalen 12 so hinter die Gummidichtlippen 13 der Innenbuchse 2 gedrückt, bis sie in den Hinterschneidungsbereich 16 einrasten. Damit die Außenbuchsen 3 und die Innenbuchsen 2 mit ihren klappbaren Gummischichten auf gleicher Höhe stehen, um zusammen aufgeklappt werden zu können und über einen Stabilisator gesteckt werden zu können, sind die Außen-Halbschalen 17 und die Innen-Halbschalen 4 mit einem Mittelpunktversatz 23, wie er beispielhaft in den Fig. 2 und 7 dargestellt ist, hergestellt. Dieser Mittelpunktversatz 23 beträgt beispielsweise 3 mm. Damit ist sichergestellt, daß beim Aufklappen der Lagerbuchse 1 sich die Innenbuchse 2 und die Außenbuchse 3 mit ihren gegeneinander verrasteten Schalen nicht so verschieben, daß sich die Kunststoff-Gleithalbschalen 12 unbeabsichtigt aus dem Hinterschneidungsbereich 16 lösen.

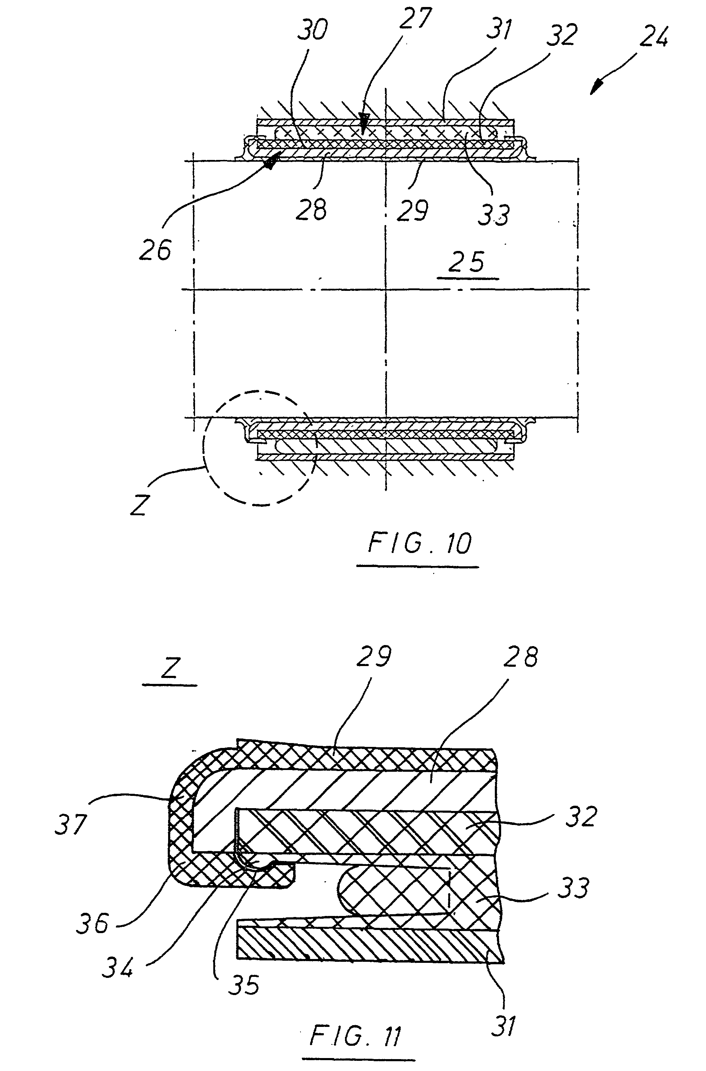

In der Fig. 10 ist eine alternative Ausführungsform einer Lagerbuchse 24 dargestellt. Diese Lagerbuchse 24 ist unter Aufbringung einer radialen Vorspannung auf einem hier lediglich strichpunktiert dargestellten Stabilisator 25 montiert. Wie dies aus der Fig. 10 weiter ersichtlich ist, besteht diese Lagerbuchse 24 aus einer Innenbuchse 26 und einer Außenbuchse 27.

Die Innenbuchse 26 besteht aus als Metall-Gleithalbschalen ausgebildeten Innen-Halbschalen 28, auf deren Innenoberfläche eine innere Gummischicht 29 aufvulkanisiert ist und deren Außenoberflächen Gleitflächen 30 für die Außenbuchse 27 bilden.

Die Außenbuchse 27 besteht aus als Metall-Außenhalbschalen ausgebildeten Außen-Halbschalen 31 und radial inneren Kunststoff-Gleithalbschalen 32, zwischen denen Gummi-Halbschalen 33 einvulkanisiert sind. Entsprechend der Ausführungsform der Lagerbuchse nach den Fig. 1 bis 9 sind auch hier die Anlageflächen zwischen der Innenbuchse 26 und der Außenbuchse 27 als Gleitflächen ausgebildet.

Wie dies insbesondere aus Fig. 11 ersichtlich ist, ist hier in Abwandlung zu der ersten Ausführungsform nach den Fig. 1 bis 9 jeweils im axialen Randbereich der Kunststoff-Gleithalbschalen 32 an deren radial äußerer Oberfläche ein umlaufender Gummiwulst 34 gebildet, der von einer entsprechend zugeordneten Nut 35 im übergreifenden Bund 36 einer integral mit der inneren Gummischicht 29 ausgebildeten Gummi-Dichtlippe 37 dicht überdeckt ist. Auch hier ergibt sich eine gute Dichtfunktion, wobei jedoch wegen der fehlenden Einlaufschrägen die Montage etwas aufwendiger und ggf. mit einem Werkzeug durchzuführen ist.

Sowohl für die Ausführungsform nach den Fig. 1 bis 9 wie auch für die Ausführungsform nach den Fig. 10 und 11 kann wenigstens eine der Gleitflächen vor dem Zusammenbau eingefettet werden. Vorzugsweise wird die Gleitfläche 6, 30 an der Innenbuchse 2, 26 vor dem Zusammenbau eingefettet.

## Patentansprüche

1. Lagerbuchse, insbesondere für die Lagerung eines Stabilisatorstabs an einem Kraftfahrzeug,
mit wenigstens zwei in einem Aufnahmeauge zur Aufbringung einer Gummivorspannung zusammenspannbaren Gummi-Metall-Halbschalen, wobei
eine Innenbuchse (2; 26) aus Innen-Halbschalen (4; 28) mit einer Innenoberfläche (5; 29) mit hoher Reibung vorgesehen ist, so daß die Innenbuchse (2; 26) nach der Montage der Lagerbuchse (1; 24) bei aufgebrachter Vorspannung auf einem Lagerzapfen, insbesondere einem Stabilisatorstab (25), verdrehfest gehalten ist,
eine Außenbuchse (3; 27) aus Außen-Halbschalen (17; 31) mit einer Außenoberfläche dergestalt vorgesehen ist, daß nach der Montage der Lagerbuchse (1; 24) bei aufgebrachter Vorspannung die Außenbuchse (3; 27) im Aufnahmeauge verdrehfest gehalten ist, und
die Anlageflächen zwischen der Innenbuchse (2; 26) und der Außenbuchse (3; 27) als Gleitflächen ausgebildet sind,
**dadurch gekennzeichnet,**
**daß** die Innen-Halbschalen (4; 28) der Innenbuchse (2; 26) aus Metall-Gleithalbschalen gebildet sind, auf deren Innenoberflächen eine innere Gummischicht (5; 29) aufvulkanisiert ist und deren Außenoberflächen Gleitflächen (6; 30) für die Außenbuchse (3; 27) bilden, und
**daß** die Außen-Halbschalen (17; 31) der Außenbuchse (3; 27) aus Metall-Außenhalbschalen und radial inneren Kunststoff-Gleithalbschalen (12; 32) bestehen, zwischen denen Gummi-Halbschalen (18; 33) einvulkanisiert sind, wobei die Innenoberflächen der Kunststoff-Gleithalbschalen (12; 32) Gleitflächen bezüglich der Innenbuchse (2; 26) bilden.

2. Lagerbuchse nach Anspruch 1, **dadurch gekennzeichnet, daß** die innere Gummischicht (5; 29) axiale Längsnuten (7) aufweist.

3. Lagerbuchse nach Anspruch 1 oder Anspruch 2, **dadurch gekennzeichnet, daß** die innere Gummischicht (5; 29) im Bereich der axialen Innenbuchsenstirnseiten nach radial innen zu Dichtlippen (10) ausgebildet ist.

4. Lagerbuchse nach einem der Ansprüche 1 bis 3, **dadurch gekennzeichnet, daß** die Metall-Gleithalbschalen (4; 28) stirnseitig nach radial außen winkelig zu Seitenführungsstegen (11) geprägt sind, zwischen denen die Kunststoff-Gleithalbschalen (12; 32) axial formschlüssig gehalten sind.

5. Lagerbuchse nach Anspruch 4, **dadurch gekennzeichnet,**
**daß** im Bereich der Seitenführungsstege (11) jeweils eine stirnseitige Dichtlippe (13; 37) aus Gummi, vorzugsweise integral mit der inneren Gummischicht (5; 29) angeformt ist, die in einem Hinterschneidungsbereich (16) mit einem umlaufenden Bund ( 14; 36) zur axialen Lagermitte hin vorsteht, und
**daß** dieser Bund (14; 36) die Kunststoff-Gleithalbschalen (12; 32) in einem axialen Randbereich anliegend übergreift und dadurch die Gleitflächen nach außen abdichtet sowie die Innenbuchse (2; 26) und die Außenbuchse (3; 27) in einem Vormontagezustand zusammenhält.

6. Lagerbuchse nach Anspruch 5, **dadurch gekennzeichnet, daß** die stirnseitige Dichtlippe (13) nach radial außen mit einem kegelförmig schräg gestellten Einführring (15) ausgebildet ist.

7. Lagerbuchse nach Anspruch 5, **dadurch gekennzeichnet, daß** jeweils im axialen Randbereich der Kunststoff-Gleithalbschalen (32) an deren radial äußerer Oberfläche ein umlaufender Gummiwulst (34) gebildet ist, der von einer zugeordneten Nut (35) im übergreifenden Bund (36) dicht überdeckt ist.

8. Lagerbuchse nach einem der Ansprüche 1 bis 7, **dadurch gekennzeichnet, daß** die Kunststoff-Gleithalbschalen (12; 32) an den stirnseitig zur jeweiligen Trennebene weisenden Innenflächen eine Fase (20), vorzugsweise von ca. 15° und/oder die Metall-Gleithalbschalen (4; 28) an den stirnseitig zur jeweiligen Trennebene weisenden Außenflächen eine Fase (9), vorzugsweise von ca. 30° aufweisen.

9. Lagerbuchse nach einem der Ansprüche 1 bis 8, **dadurch gekennzeichnet, daß** die Innen-Halbschalen (4; 28) einseitig an einer Längsseite durch eine Gummibrücke (8) vorzugsweise mittels einer dort durchgehend ausgebildeten, inneren Gummischicht (5; 29) klappbar verbunden sind.

10. Lagerbuchse nach einem der Ansprüche 1 bis 9, **dadurch gekennzeichnet, daß** die Außen-Halbschalen (17; 31) einseitig an einer Längsseite durch einen Gummisteg (19) klappbar verbunden sind.

11. Lagerbuchse nach Anspruch 10, **dadurch gekennzeichnet, daß** der Gummisteg (19) radial nach außen winkelig ausgebildet ist, so daß bei einem Zusammenspannen der Innenbuchse (2; 26) und Außenbuchse (3; 27) ein Knickverhalten des Gummistegs (19) weg von der Gleitfläche vorgegeben ist.

12. Lagerbuchse nach einem der Ansprüche 9 bis 11, **dadurch gekennzeichnet, daß** die beiden jeweils längseinseitig verbundenen Außen-Halbschalen (17; 31) und Innen-Halbschalen (4; 28) mit einem Mittelpunktversatz, vorzugsweise von ca. 3 mm hergestellt sind.

13. Lagerbuchse nach einem der Ansprüche 1 bis 12, **dadurch gekennzeichnet, daß** wenigstens eine der Gleitflächen zwischen der Innenbuchse (2; 26) und der Außenbuchse (3; 27), vorzugsweise die Gleitfläche (6; 30) an der Innenbuchse (2; 26) vor dem Zusammenbau eingefettet ist.

## Claims

1. Bearing bushing, in particular for mounting a stabilizer bar on a motor vehicle, having at least two rubber-metal half shells which can be clamped together in a retaining eye in order to apply an initial rubber stress, an inner bushing (2; 26) comprising inner half shells (4; 28) being provided with an inner surface (5; 29) having a high level of friction, so that, after the bearing bushing (1; 24) is installed at the applied inner stress, the inner bushing (2; 26) is held in a torsionally fixed manner on a bearing journal, in particular a stabilizer bar (25),
an outer bushing (3; 27) comprising outer half shells (17; 31) being provided with an outer surface in such a manner that, after the bearing bushing (1; 24) is installed at the applied initial stress, the outer bushing (3; 27) is held in a torsionally fixed manner in the retaining eye, and
the bearing surfaces between the inner bushing (2; 26) and the outer bushing (3;27) being designed as sliding surfaces,
**characterized in that** the inner half shells (4; 28) of the inner bushing (2; 26) are formed from metal sliding half shells, onto the inner surfaces of which an inner rubber layer (5; 29) is vulcanized, and the outer surfaces of which form sliding surfaces (6; 30) for the outer bushing (3; 27), and
**in that** the outer half shells (17; 31) of the outer bushing (3; 27) comprise metal outer half shells and radially inner plastic sliding half shells (12; 32), between which rubber half shells (18; 33) are vulcanized into place, the inner surfaces of the plastic sliding half shells (12; 32) forming sliding surfaces with regard to the inner bushing (2; 26).

2. Bearing bushing according to Claim 1, **characterized in that** the inner rubber layer (5; 29) has axial longitudinal grooves (7).

3. Bearing bushing according to Claim 1 or Claim 2, **characterized in that** the inner rubber layer (5; 29) is designed radially inwards in the region of the axial inner-bushing end sides to give sealing lips (10).

4. Bearing bushing according to one of Claims 1 to 3, **characterized in that** the metal sliding half shells (4; 28) are stamped on the end side radially outwards in an angular manner to give lateral guiding webs (11) between which the plastic sliding half shells (12; 32) are held axially in a form-fitting manner.

5. Bearing bushing according to Claim 4, **characterized in that** an end sealing lip (13; 37) of rubber is integrally formed in the region of the lateral guiding webs (11), preferably integrally with the inner rubber layer (5; 29) and protrudes in an undercut region (16) with an encircling collar (14; 36) towards the axial centre of the bearing, and
**in that** this collar (14; 36) fits in an axial end region over the plastic sliding bearing shells (12; 32) in a manner bearing against them and thereby seals the sliding surfaces to the outside and holds the inner bushing (2; 26) and the outer bushing (3; 27) together in a state prior to installation.

6. Bearing bushing according to Claim 5, **characterized in that** the end sealing lip (13) is designed radially outwards with an introductory ring (15) which is positioned obliquely in a cone-shaped manner.

7. Bearing bushing according to Claim 5, **characterized in that** an encircling rubber bead (34) is formed in each case in the axial end region of the plastic sliding half shells (32), on the radially outer surface thereof, the said rubber bead being covered in a sealed manner by an associated groove (35) in the collar (36) fitting over it.

8. Bearing bushing according to one of Claims 1 to 7, **characterized in that** the plastic sliding half shells (12; 32) have a bevel (20), preferably of approximately 15°, on the inner surfaces which point on the end side to the particular plane of separation, and/or the metal sliding half shells (4; 28) have a bevel (9), preferably of approximately 30°, on the outer surfaces which point on the end side towards the particular plane of separation.

9. Bearing bushing according to one of Claims 1 to 8, **characterized in that** the inner half shells (4; 28) are connected in a hinged manner on one side by a rubber bridge (8) on one longitudinal side, preferably by means of an inner rubber layer (5; 29) formed continuously there.

10. Bearing bushing according to one of Claims 1 to 9, **characterized in that** the outer half shells (17; 31) are connected in a hinged manner on one side by a rubber web (19) on one longitudinal side.

11. Bearing bushing according to Claim 10, **characterized in that** the rubber web (19) is formed radially outwards in an angled manner, so that, when the inner bushing (2; 26) and outer bushing (3; 27) are clamped together, a buckling behaviour of the rubber web (19) away from the sliding surface is specified.

12. Bearing bushing according to one of Claims 9 to 11, **characterized in that** the two outer half shells (17; 31) and inner half shells (4; 28) which are connected in each case on one longitudinal side are produced with a central-point offset, preferably of approximately 3 mm.

13. Bearing bushing according to one of Claims 1 to 12, **characterized in that** at least one of the sliding surfaces between the inner bushing (2; 26) and the outer bushing (3; 27), preferably the sliding surface (6; 30) on the inner bushing (2; 26), is greased before assembly.

## Revendications

1. Palier en particulier pour le montage tourillonnant d'une barre stabilisatrice sur un véhicule,
avec au moins deux demi-coquilles de type métal-caoutchouc susceptibles d'être assemblées sous contrainte dans un oeillet de logement pour appliquer une précontrainte provenant du caoutchouc, où
un coussinet intérieur (2 ; 26) formé de demi-coquilles intérieures (4 ; 28) avec une surface intérieure (5 ; 29) à frottement élevé est prévu, de manière que le coussinet intérieur (2 ; 26), après la montage du coussinet de palier (1 ; 24), lorsque la précontrainte est appliquée, soit maintenue avec une rigidité en rotation sur un tourillon de palier, en particulier une barre stabilisatrice (25)
un coussinet extérieur (3 ; 27) formé de demi-coquilles extérieures (17 ; 31) ayant une surface extérieure formée de manière que, après le montage du coussinet de palier (1 ; 24), alors que la précontrainte est appliquée, le coussinet extérieur (3 ; 27) soit maintenu immobilisé en rotation dans l'oeillet de logement, et
les faces d'appui entre le coussinet intérieur (2 ; 26) et le coussinet extérieur (3 ; 27) sont conformées en faces de glissement,
**caractérisé en ce que**
les demi-coquilles intérieures (4 ; 28) du coussinet intérieur (2 ; 26) sont formées en demi-coquilles à glissement métalliques, sur les surfaces intérieures desquelles est rapportée par vulcanisation une couche de caoutchouc intérieure (5 ; 29), et dont les faces extérieures forment des faces de glissement (6 ; 30) pour le coussinet extérieur (3 ; 27), et
**en ce que** les demi-coquilles extérieures (17 ; 31) du coussinet extérieur (3 ; 27) sont formées de demi-coques extérieures en métal et de demi-coques de glissement intérieur en matière synthétique (12 ; 32), entre lesquelles sont intégrées par vulcanisation des demi-coques en caoutchouc (18 ; 33), sachant que les surfaces intérieures des demi-coques de glissement en métal synthétique (12 ; 13) forment des surfaces de glissement par rapport au coussinet intérieur (2 ; 26).

2. Coussinet de palier selon la revendication 1, **caractérisé en ce que** la couche en caoutchouc intérieur (5 ; 29) présente des rainures longitudinales (7) axiales.

3. Coussinet de palier selon la revendication 1 ou la revendication 2,
**caractérisé en ce que** la couche en caoutchouc intérieur (5 ; 29) est conformée dans la zone des faces frontales de coussinet intérieur axial, radialement vers l'intérieur en donnant des lèvres d'étanchéité (10).

4. Coussinet de palier selon l'une des revendications 1 à 3, **caractérisé en ce que** les demi-coques à glissement métalliques (4 ; 28) sont sujettes à un formage tridimensionnel en face frontale en étant orientées sous un certain angle radialement vers l'extérieur pour donner des nervures de guidage latéral (11), entre lesquelles les demi-coques à glissement en matière synthétique (12 ; 32) sont maintenues axialement par une liaison à ajustement de forme.

5. Coussinet de palier selon la revendication 4, **caractérisé en ce que**,
dans la zone des nervures de guidage latéral (11), est chaque fois formée, d'un seul tenant, une lèvre d'étanchéité (13 ; 37) située côté frontal, en caoutchouc, de préférence de façon monobloc avec la couche de caoutchouc intérieure (5 ; 29), qui fait saillie dans une zone à contre-dépouille (16), par une collerette de pourtour (14 ; 36), vers le centre axial de palier, et
**en ce que** cette collerette (14 ; 36) entoure les demi-coques à glissement en matière synthétique (12 ; 32) en étant appui dans une zone de bordure axiale et maintient assemblées de ce fait les faces de glissement de façon isolée et de façon étanche vers l'extérieur, ainsi que le coussinet intérieur (2 ; 26) et le coussinet extérieur (3 ; 27), en un état de pré-montage.

6. Coussinet de palier selon la revendication 5, **caractérisé en ce que** la lèvre d'étanchéité (13) située côté frontal est réalisée en allant radialement vers l'extérieur avec une bague d'insertion (15) placée obliquement et à forme conique.

7. Coussinet de palier selon la revendication 5, **caractérisé en ce que** chaque fois dans la zone de bordure axiale des demi-coques de glissement en matière synthétique (32), sur leur surface extérieure radiale, est formé un bourrelet de pourtour (34) en caoutchouc recouvert de façon étanche par une rainure (35) associée, dans la collerette (36) assurant l'entourage.

8. Coussinet de palier selon l'une des revendications 1 à 7, **caractérisé en ce que** les demi-coques à glissement en matière synthétique (12; 32) présentent, sur les faces intérieures, toumées frontalement vers le plan de séparation respectif, un chanfrein (20) de préférence d'environ 15° et/ou les demi-coques à glissement métalliques (4 ; 28) présentent, sur les faces extérieures toumées frontalement vers le plan de séparation respectif, un chanfrein (9) ayant de préférence une valeur d'environ 30°.

9. Coussinet de palier selon l'une des revendications 1 à 8, **caractérisé en ce que** les demi-coques intérieures (4 ; 28) sont reliées à une extrémité sur un côté longitudinal, de façon à pouvoir être rabattues, au moyen d'un pont en caoutchouc (8), de préférence au moyen d'une couche intérieure en caoutchouc (5 ; 29) y étant réalisée de façon continue.

10. Coussinet de palier selon l'une des revendications 1 à 9, **caractérisé en ce que** les demi-coques extérieures (17 ; 31) sont reliées à une extrémité de façon rabattable, sur un côté long, au moyen d'une nervure en caoutchouc (19).

11. Coussinet de palier selon la revendication 10, **caractérisé en ce que** la nervure en caoutchouc (19) est réalisée de façon inclinée radialement vers l'extérieur, de sorte que, lorsque l'on assemble avec serrage le coussinet intérieur (2 ; 26) et le coussinet extérieur (3 ; 27), on obtienne un comportement en flambage de la nervure de caoutchouc (19) s'écartant de la face de glissement.

12. Coussinet de palier selon l'une des revendications 9 à 11, **caractérisé en ce que** les deux demi-coques extérieures (17 ; 31) et les demi-coques intérieures (4 ; 28), reliées chacune du côté long, sont fabriquées avec un décalage par rapport au centre, de préférence d'une valeur d'environ 3 mm.

13. Coussinet de palier selon l'une des revendications 1 à 12, **caractérisé en ce qu'**au moins l'une des faces de glissement entre le coussinet intérieur (2 ; 26) et le coussinet extérieur (3 ; 27), de préférence la face de glissement (6 ; 7) sur le coussinet intérieur (2 ; 26), est graissée intérieurement avant l'assemblage.
